# EUROPEAN PATENT APPLICATION

(11) **EP 3 553 653 A1**
(43) Date of publication of application: **16.10.2019**
(21) Application number: 17877499.8
(22) Date of filing: 21.08.2017
(51) Int. Cl.: G06F 9/445

(54) **SYSTEM RESET METHOD, APPARATUS AND ELECTRONIC DEVICE**

(30) Priority: 08.12.2016 CN 201611124303
(71) Applicant: ZTE Corporation, Shenzhen, Guangdong 518057 (CN)
(72) Inventor: DI, Ruomeng, Shenzhen Guangdong 518057 (CN)
(74) Representative: Aipex B.V.
(86) International application number: PCT/CN2017/098343
(87) International publication number: WO 2018/103370

(57) **Abstract**

The present invention provides a system reset method, apparatus, and electronic device. The method includes: establishing a flag file at a preset position of a system according to a received system reset indication, and the system reset indication being used to indicate performing a reset operation on the system; after the system is restarted, determining whether the flag file exists in the preset position of the system; and when determining that the flag file exists in the preset position, resetting the system. Through the present invention, solving the problem of high complexity in implementing the system reset process in the related art, the complexity of implementing the system reset process is reduced.

## Description

### TECHNICAL FIELD

The present invention relates to the field of communications, and in particular to a system reset method, apparatus and electronic device.

### BACKGROUND

With the advancement of production technology and technology, the internal storage capacity of an Android terminal is getting larger and larger, making the dependence of external storage cards smaller and smaller. Users are more inclined to store photos, videos, documents, etc. in the terminal virtual internal storage card. When a terminal has a software failure or is handed over to others for use, restoring the factory settings is an extremely convenient and effective way. However, the function of restoring the factory settings currently formats the entire user data partition without difference, and the data stored by the user on a virtual internal storage card is also erased together, resulting in the loss of precious data of the user. Therefore, a special factory reset function is required except the original formatted entire data area (referred as a path of "/data"), . That is, while the path of "/data" is erasing, files and data stored by the user on the virtual internal storage card are retained. This will name this feature "System Reset."

Currently in Android L and previous versions, there are some vendors and third-party ROMs that have similar functions of retaining internal storage when erasing the path of "/data". The erase operation is performed by mounting the path of "/data" in recovery mode and deleting other files except a path of "/data/media".

Starting from Android M, a"/data" partition is encrypted by default. The "/data" partition cannot be mounted directly or even be deleted under recovery mode. If want to recursively delete by mounting /data, need to transplant the entire set of encryption and decryption logic, which is cumbersome and easy to introduce unknown problems.

There is currently no effective solution for the problem of high complexity in implementing the system reset process.

### SUMMARY

Embodiments of the present invention provide a system reset method, apparatus, and electronic device to at least solve the problem of high complexity in implementing a system reset process in the related art.

According to an embodiment of the present invention, a system reset method is provided, including: establishing a flag file at a preset position of a system according to a received system reset indication, and the system reset indication being used to indicate performing a reset operation on the system; after the system is restarted, determining whether the flag file exists in the preset position of the system; and when determining that the flag file exists in the preset position, resetting the system.

Alternatively, establishing the flag file in the preset position of the system according to the received system reset indication includes: receiving the system reset indication; and starting a recovery mode of the system according to the system reset indication; erasing a cache area in the recovery mode, and establishing the flag file at the preset position of the cache area.

Alternatively, resetting the system includes: deleting all files, or folders, or all files and folders except the preset reserved file in a first preset path, where the preset reserved file includes at least one the following : a file stored in the memory of the system, a file stored in a second preset path, and a file stored in a white list.

Alternatively, determining whether the flag file exists in the preset position of the system comprises: decrypting the system according to a predetermined rule after the system is restarted; and when the system is decrypted successfully, determining whether the flag file exists in the preset position of the system.

Alternatively, decrypting the system according to the predetermined rule includes: detecting an encryption type of the system, the encryption type including one of: a default password, a custom password; and the encryption type is in the case of the default password, decrypting the system by using the default password; or, in the case where the encryption type is the custom password, acquiring decryption information, and decrypting the system according to the decryption information.

Alternatively, acquiring decryption information and decrypting the system according to the decryption information includes: mounting data based on a temporary file, and sending a password input indication, the password input indication being used to prompt the user to input the custom password; receiving the decryption information in response to the password input indication; determining whether the decryption information matches the system; decrypting the system if it is determined that the decryption information matches the system, and unloading the data based on the temporary file when the system is decrypted successfully.

According to another embodiment of the present invention, there is provided a system reset apparatus including: an establishment module being configured to establish a flag file at a preset position of the system according to the received system reset indication, herein the system reset indication is used to indicate that the system performs a reset operation; the determination module being configured to determine whether the flag file exists in the preset position of the system after the system is restarted; the reset module being configured to determine in the case where the flag file exists in the preset position, reseting the system.

Alternatively, the establishment module includes: a receiving unit being configured to receive the system reset indication; a starting unit being configured to start a recovery mode of the system according to the system reset indication; and a processing unit being configured to erase the cache area in the recovery mode, and the flag file is established in the preset position of the cache area.

Alternatively, the reset module is configured to: delete all files, or folders, or all files and folders except the preset reserved file in the first preset path, where the preset reserved file includes at least one of the following: a file stored in the memory of the system, a file stored in the second preset path, and a file stored in the white list.

Alternatively, the determination module includes: a decrypting unit being configured to decrypt the system according to a predetermined rule after the system is restarted; and the determining unit being configured to determining, when the decryption is successfully, whether the flag file exists in the preset position.

According to another embodiment of the present invention, there is provided a system reset electronic device including: a processor and a memory, herein the processor being configured to establish a flag file at a preset position of the system according to the received system reset indication. Herein the system reset indication is used to indicate a reset operation on the system; determine whether the flag file exists in the preset position of the system after the system is restarted; reset the system if the flag file exists in the preset position. The memory is connected to the processor, and being configured to store a system configuration before the system is reset and to store a preferred configuration after the system is reset.

Alternatively, the processor being configured to receive the system reset indication; start a recovery mode of the system according to the system reset indication; erase a cache area in the recovery mode, and establish the flag file at the preset position of the cache area.

Alternatively, the processor being configured to delete all files, or folders, or all files and folders except the preset reserved file in the first preset path, herein the preset reserved file includes at least one of the following: a file stored in the memory of the system, a file stored in the second preset path, and a file stored in the white list.

Alternatively, the processor being configured to decrypt the system according to a predetermined rule when the system is restarted; and when the system is decrypted successfully, determine whether the flag file exists in the preset position of the system.

In the embodiment of the present invention, a storage medium is provided, and the storage medium may store an execution instruction for performing the implementation of the system reset method in the foregoing embodiment.

Through the present invention, a flag file is established at a preset position of the system according to the received system reset indication, herein the system reset indication is used to indicate a reset operation on the system. After the system is restarted, it is determined whether the flag file exists in the preset position of the system.; When it is determined that there is a flag file in the preset position, the system is reset. And thus it can be seen that the above scheme is used to establish a flag file in the preset position of the system when the system needs to be reset. when the system is restarted, it is determined whether the system is reset by determining whether the preset position exists or not, and if needed, resetting the system in the state of starting the system, thereby avoiding the system reset operation in the system recovery mode. Therefore, the complexity of implementing the system reset process is reduced, thereby solving the problem of high complexity in implementing the system reset process in the related art.

### BRIEF DESCRIPTION OF DRAWINGS

FIG. 1 shows a hardware block diagram of a mobile terminal of a system reset method provided by an embodiment of the present invention;
FIG. 2 shows a flowchart of a method for system reset provided by an embodiment of the present invention;
FIG. 3 shows structure diagram one of a system reset apparatus provided by an embodiment of the present invention;
FIG. 4 shows structure diagram two of a system reset apparatus provided by an embodiment of the present invention;
FIG. 5 shows structure diagram three of a system reset apparatus provided by an embodiment of the present invention;
FIG. 6 shows a flowchart one of a method for system reset method with an alternative embodiment of the present invention;
FIG. 7 shows a flowchart two of a method for system reset method with an alternative embodiment of the present invention.

### DETAILED DESCRIPTION

The present invention will be described in detail below with reference to the drawings in conjunction with the embodiments. It should be noted that the embodiments in the present application and the features in the embodiments may be combined with each other without conflict.

It is to be understood that the terms "first", "second", and the like in the specification and claims of the present invention are used to distinguish similar objects, and are not necessarily used to describe a particular order or sequence.

### Embodiment one

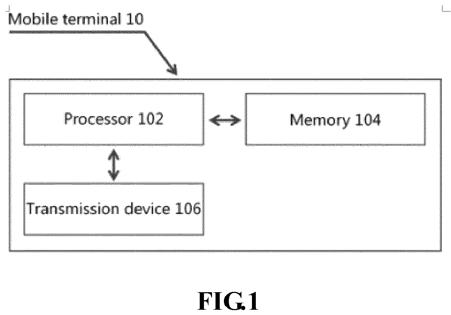

The method provided by embodiment one of the present invention may be executed in a mobile terminal, a computer terminal, or the like. Take the example of running on a mobile terminal, FIG. 1 shows a hardware block diagram of a mobile terminal of a system reset method provided by an embodiment of the present invention.

As shown in FIG. 1, the mobile terminal 10 may include one or more (Only one is shown in the figure) processor 102 (processor 102 may include, but not limited to, a processing device such as a microprocessor MCU or a programmable logic device FPGA), a memory 104 for storing data, and a transmission device 106 for communication functions. It will be understood by those skilled in the art that the structure shown in FIG. 1 is merely illustrative and would not limit the structure of the above electronic device. For example, the mobile terminal 10 may also include more or fewer components than those shown in FIG. 1, or have a different configuration than that shown in FIG 1.

The memory 104 can be used to store software programs and modules of application software, such as program instructions or modules corresponding to the system reset method in the embodiment of the present invention. And the processor 102 executes each by running a software program and a module stored in the memory 104, thereby performing various functional applications and data processing. That is, the above method is implemented. The memory 104 may include high speed random access memory, and may also include non-volatile memory such as one or more magnetic storage devices, flash memory, or other non-volatile solid state memory. In some embodiments, the memory 104 may further include the memory remotely located relative to the processor 102, which may be connected to mobile terminal 10 over a network. Embodiments of such networks include, but are not limited to, the Internet, intranets, local area networks, mobile communication networks, and combinations thereof.

The transmission device 106 is arranged for receiving or transmitting data via a network. The above-described network specific embodiment may include a wireless network provided by a communication provider of the mobile terminal 10. In one example, the transmission device 106 includes a Network Interface Controller (NIC) that can be connected to other network devices through a base station to communicate with the Internet. In one embodiment, the transmission device 106 can be a Radio Frequency (RF) module for communicating with the internet wirelessly.

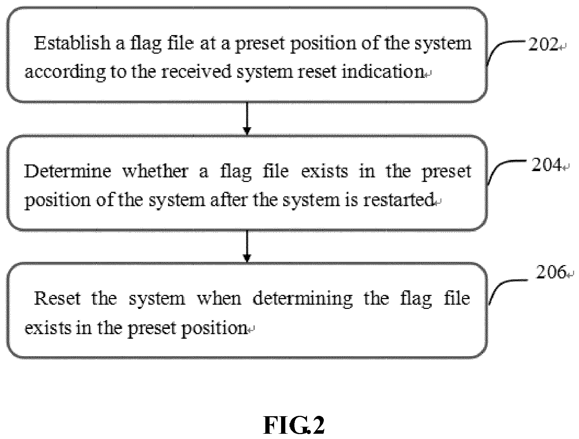

A system reset method is provided in this embodiment. FIG. 2 shows a flowchart of a method for system reset provided by an embodiment of the present invention. As shown in FIG. 2, the method includes the following steps.

At step 202, a flag file is established at a preset position of the system according to the received system reset indication. Herein the system reset indication is used to indicate that the system performs a reset operation.

At step 204, after the system is restarted, it is determined whether a flag file exists in the preset position of the system.

At step 206, the system is reset when determining the flag file exists in the preset position.

Alternatively, the above system reset method may be, but is not limited to, applied to a scenario of system reset. For example: the system is restored to factory settings.

Alternatively, the system reset method may be, but is not limited to, being applied to a terminal device or the like carrying an Android system, such as a mobile phone, a tablet computer, a smart wearable device, or the like.

Through the above steps, a flag file is established at a preset position of the system according to the received system reset indication, herein the system reset indication is used to indicate a reset operation on the system; determining whether the flag file exists in the preset position of the system after the system is restarted; when it is determined that there is a flag file in the preset position, the system is reset. And thus it can be seen that the above scheme is used to establish a flag file in the preset position of the system when the system needs to be reset. When the system is restarted, it is determined whether the system is reset by determining whether the preset position exists or not, and if needed, resetting the system in the state of starting the system, thereby avoiding the system reset operation in the system recovery mode. Therefore, the complexity of implementing the system reset process is reduced, thereby solving the problem of high complexity in implementing the system reset process in the related art.

In this embodiment, the preset position of the flag file can be established, but is not limited to being located in the cache of the system.

In this embodiment, the system reset indication may be, but is not limited to, a "system reset" command sent by the user according to selecting an option of "system reset" in a setup menu, and the system reset indication may include, but not limited to a system reset option selected by the user in a recovery mode of the system.

Alternatively, in the foregoing step S202, when receiving the system reset indication, the recovery mode of the system may be started according to the indication of the system reset indication, and after entering the recovery mode, the cache area in the recovery mode is erased and a flag file is established in the cache area. For example, the steps may include receiving the system reset indication, starting the recovery mode of the system according to the system reset instruction, erasing the cache area in the recovery mode, and establishing a flag file in the preset position of the cache area.

Alternatively, in the foregoing step S206, the system reset may be performed by deleting all files, or folders, or all files and folders except the preset reserved file in a first preset path, where the preset reserved file may be but is not limited to include at least one of the following: a file stored in a memory of the system, a file stored in a second preset path, and a file stored in a white list.

During the reset process of the system, simply erasing the data area (referred as /data partition) other than the internal storage content poses a potential security risk. For example, after a device with setting a lock screen PIN code is stolen, the thief can erase the PIN code set by the user according to manually entering the recovery mode to select the factory-reset option of the internal storage, to achieve the purpose of bypassing the PIN code. At this time, pictures, videos, and important data that the user originally stored on the internal memory card were not deleted, and the thief easily obtained an access authority. In other words, the thief can illegally obtain the user's data by bypassing the lock screen PIN code.

Alternatively, in the foregoing step S204, the legality of the resetting process may be but is not limited to, verified by means of decrypting the system according to a predetermined rule, thereby enhancing the security of the system. For example, after the system is restarted, the system is decrypted according to a predetermined rule, and if the system is decrypted successfully, it is determined whether a flag file exists in the preset position of the system.

Alternatively, the system may be, but is not limited to be, decrypted by the following ways: detecting an encryption type of the system, herein the encryption type including one of the following: a default password, a custom password; and when the encryption type is a default password, decrypting the system with the default password; or when the encryption type is a custom password, the decryption information is obtained, and the system is decrypted according to the decrypted information.

Alternatively, when the encryption type is a custom password, it may be but is not limited to be, decrypted by: mounting a temporary file-based data, and sending a password input indication, herein the password input indication is used to prompt the user to input a custom password; receiving the decryption information in response to the password input indication; determining whether the decrypted information matches the system, and decrypting the system if it is determined that the decrypted information matches the system, and when the system is decrypted successfully unloading the data based on the temporary file.

### Embodiment two

In this embodiment, a system reset device is also provided, which is used to implement the above-mentioned embodiments and preferred embodiments, and has not been described again. As used below, the term "module" may implement a combination of software and/or hardware of a predetermined function. Although the apparatus described in the following embodiments is preferably implemented in software, hardware, or a combination of software and hardware, is also possible and contemplated.

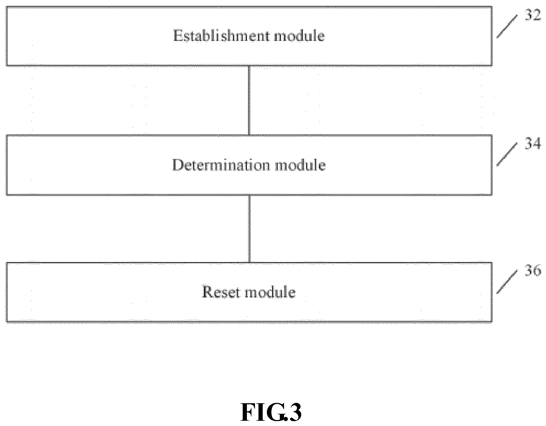

FIG. 3 shows structure diagram one of a system reset apparatus provided by an embodiment of the present invention, as shown in Figure 3, the apparatus includes an establishment module 32, a determination module 34, a reset module 36.

The establishment module 32 is configured to establish a flag file at a preset position of the system according to the received system reset indication. Herein the system reset indication is used to indicate that the system performs a reset operation.

The determination module 34, coupled to the establishment module 32, is configured to determine whether a flag file exists in the preset position of the system after the system is restarted.

The reset module 36, coupled to the determination module 34, is configured to reset the system if it is determined that a flag file exists in the preset position.

Alternatively, the system reset apparatus described above may be but is not limited to, applied to a system reset. For example: the scene where the system is restored to factory settings.

Alternatively, the system reset device may be but is not limited to, applied to a terminal device or the like carrying an Android system, such as a mobile phone, a tablet computer, a smart wearable device, or the like.

Through the above device, the establishment module 32 establishes a flag file at a preset position of the system according to the received system reset instruction. Herein the system reset instruction is used to indicate a reset operation on the system. The determination module 34 determines after the system restarts whether there is a flag file in the preset position of the system. The reset module 36 resets the system when it determines that there is a flag file in the preset position.And thus it can be seen that the above scheme is used to establish a flag file in the preset position of the system when the system needs to be reset. When the system is restarted, it is determined whether the system is reset by determining whether the preset position exists or not, and if needed, the system is reset in the state of starting the system, thereby avoiding the system reset operation in the system recovery mode. Therefore, the complexity of implementing the system reset process is reduced, thereby solving the problem of high complexity in implementing the system reset process in the related art.

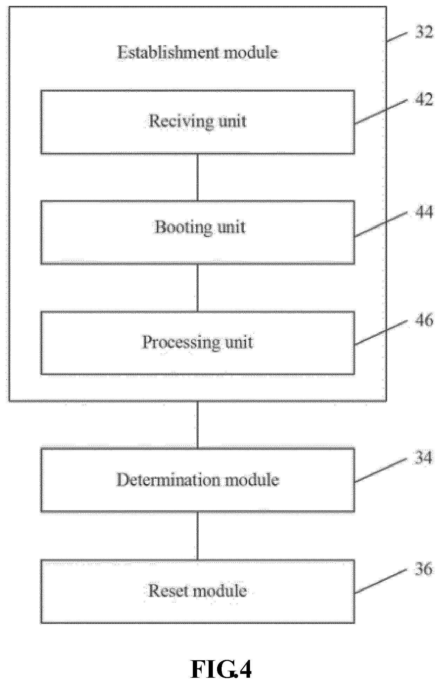

FIG. 4 shows structure diagram two of a system reset apparatus provided by an embodiment of the present invention,as shown in FIG. 4, alternatively, the establishment module 32 includes a receiving unit 42, a booting unit 44, a processing unit 46.

The receiving unit 42 is configured to receive a system reset indication.

The booting unit 44 is coupled to the receiving unit 42 and configured to initiate a recovery mode of the system according to the system reset indication;

The processing unit 46, coupled to the booting unit 44, is configured to erase the cache area in the recovery mode and establish a flag file at a preset position in the cache area.

Alternatively, the reset module 36 may be, but not limited to configured to: delete all files, or folders, or all files and folders except the preset reserved file in the first preset path, where the preset reserved file includes at least one the following : file stored in the system's memory, file stored in the second default path, and file stored in the whitelist.

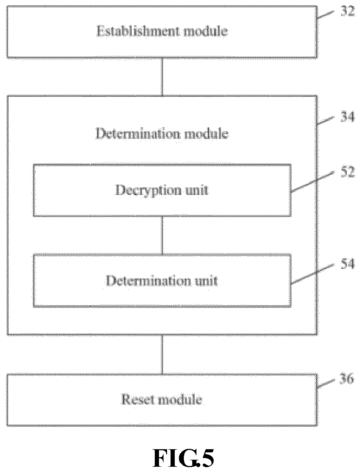

FIG. 5 shows structure diagram three of a system reset apparatus provided by an embodiment of the present invention, as shown in FIG. 5, alternatively, the determination module 34 includes a decryption unit 52, a determination unit 54.

The decryption unit 52 is configured to decrypt the system according to a predetermined rule after the system is restarted.

The determination unit 54, coupled to the decryption unit 52, is configured to when the system is decrypted successfully, determine whether a flag file exists in the preset position of the system.

Alternatively, the decryption unit 52 is configured to: detect an encryption type of the system, where the encryption type includes one of the following: a default password, a custom password; and if the encryption type is a default password, the system is decrypted using the default password. Alternatively, if the encryption type is a custom password, the decryption information is acquired; and the system is decrypted according to the decryption information.

Alternatively, the decryption unit 52 is configured to: mount the data based on the temporary file, and send a password input indication, herein the password input indication is used to prompt the user to input the custom password; the decryption information received in response to the password input indication is received; and the decryption information is determined. Whether the system matches; if the decryption information is determined to match the system, the system is decrypted; and when the system is decrypted successfully, unloading the data based on the temporary file.

It should be noted that each of the above modules may be implemented by software or hardware. For the latter, the foregoing may be implemented by, but not limited to, the foregoing modules are all located in the same processor; or, the modules are located in multiple In the processor.

An electronic device is further provided in the embodiment, the electronic device includes: a processor and a memory, herein

The processor is configured to establish a flag file at a preset position of the system according to the received system reset indication. herein the system reset indication is used to indicate a reset operation on the system; after the system is restarted, determining whether the flag file exists in the preset position of the system; Resetting the system if the flag file exists in the preset position;

The memory is coupled to the processor, and is configured to store a system configuration before the system is reset and store a preferred configuration after the system is reset.

Alternatively, the processor is configured to: receive a system reset indication; initiate a recovery mode of the system according to the system reset indication; erase the cache area in the recovery mode, and establish a flag file at a preset position of the cache area.

Alternatively, the processor is configured to: delete all files, or folders, or all files and folders except the preset reserved file in the first preset path, where the preset reserved file includes at least one of the following: the file stored in the memory of the system, the file stored in the second preset path, and the file stored in the whitelist.

Alternatively, the processor is configured to: after the system is restarted, decrypt the system according to a predetermined rule; and when the system is decrypted successfully, determining whether the flag file exists in the preset position of the system.

Alternatively, the processor is further configured to: detect an encryption type of the system, where the encryption type includes one of the following: a default password, a custom password; and when the encryption type is a default password, decrypt the system by using a default password; Alternatively, if the encryption type is a custom password, the decryption information is acquired; and the system is decrypted according to the decryption information.

Alternatively, the processor is further configured to: mount the data based on the temporary file, and send a password input indication, herein the password input indication is used to prompt the user to input the custom password; receive decryption information in response to a password input indication; and determine the decryption information Whether the system matches; if the decryption information is determined to match the system, the system is decrypted; and when the system is decrypted successfully, unloading the data based on the temporary file.

The following is a detailed description in conjunction with alternative embodiments of the present invention.

An alternative embodiment of the present invention provides a method of system resetting. In this alternative embodiment, considering that the device has a decryption process for the "/data" partition during normal booting, the erase operation originally performed under recovery can be changed to the "/cache" partition when in the recovery mode. Establish a suitable flag file, and detect whether the file exists when booting. If it exists, the data is erased after decrypting the mount the "/data" partition in the original boot process. In addition, you can maintain a whitelist for not deleting file. For example, the lock screen password file set by the user, etc., do not delete the file on the whitelist when recursively deleted, after the system reset still need to input the original lock to enter the system to avoid potential security risks.

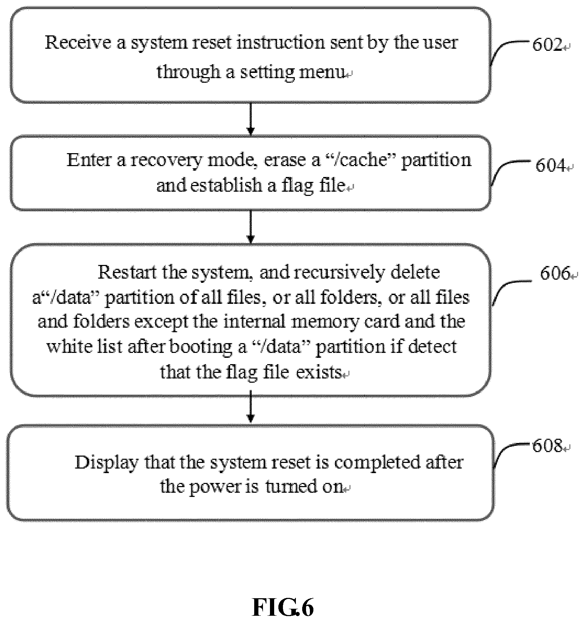

FIG. 6 shows a flowchart one of a method for system reset method with an alternative embodiment of the present invention, as shown in FIG. 6, the method includes the following steps.
At step 602, the system reset instruction sent by the user through the setting menu is received;
At step 604, the recovery mode is entered, the "/cache" partition is erased and a flag file is established;
At step 606, the system is restarted, if detect that the flag file exists, recursively deletes a"/data" partition of all files, or all folders, or all files and folders except the internal memory card and the white list after booting a "/data" partition;
At step 608, after the power is turned on, it is displayed that the system reset is completed.

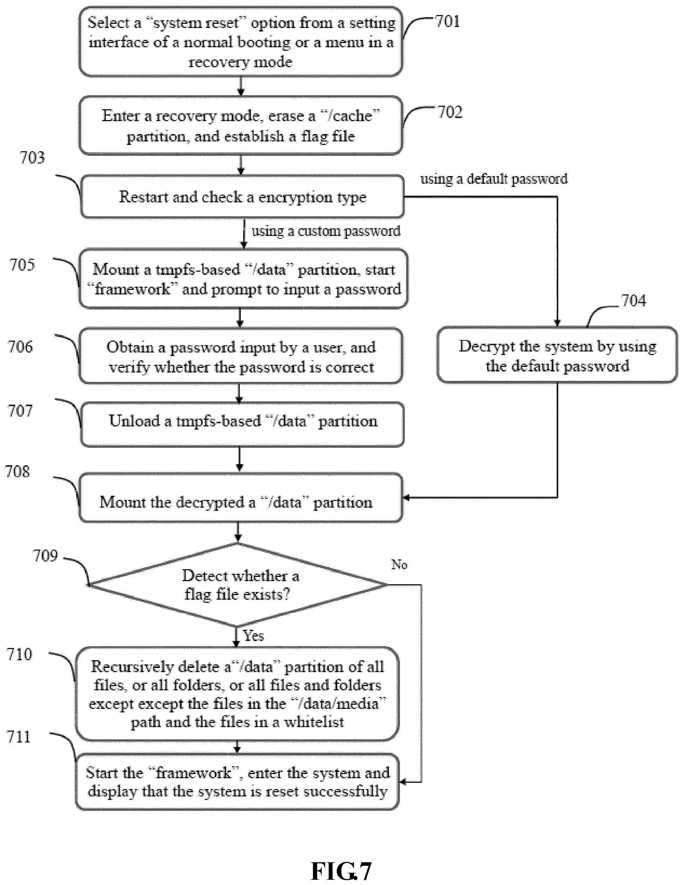

The alternative embodiment further provides a system reset method for retaining user built-in storage content for encrypting an Android device. FIG. 7 shows a flowchart two of a method for system reset method with an alternative embodiment of the present invention.as shown in FIG. 7, the method includes the following steps.
At step 701: a "system reset" option is selected by a user from a setting interface of a normal booting or a menu in a recovery mode;
At step 702: the device enters the recovery mode to start the "system reset" process, first erasing the "/cache" partition, and then establishing a flag file in the "/cache" preset position;
At step 703: the device restarts, and the encryption type is checked;
At step 704: when the device uses the default password, a void process sets the "vold.decrypt" attribute to "trigger_default_encryption", and starts the defaultcryp to service for decryption;
At step 705: when the device uses a custom password, the "void" process sets the "vold.decrypt" attribute to "trigger_restart_min_framework". At this time, a tmpfs-based "/data" partition is mounted, and the "framework" is started at the same time, and an interface prompting the user to input a password is displayed;
At step 706: obtain a password input by the user, and verify whether the password is correct by the "vold" process;
At step 707: the"vold"process sets the "vold.decrypt" attribute to "trigger_reset_main", and unloads a tmpfs-based "/data" partition;
At step 708: the void process mounts the decrypted a "/data" partition;
At step 709: detecting whether a flag file exists under a "/cache" partition;
At step 710: If the flag file exists, before the "init.rc" process runs the "post-fs-data" service, recursively deletes a"/data" partition of all files, or all folders, or all files and folders except except the files in the "/data/media" path and the files in the whitelist;
At step 711: after the deletion operation is completed, the "post-fs-data" and the normal boot process are continued. After the boot is completed, a prompt pops up to inform the user that the "system reset" process is successful.

The above embodiments are only used to illustrate the technical solutions of the present invention, and the present invention is not limited thereto, and those skilled in the art can modify or replace the technical solutions of the present invention without departing from the spirit and scope of the present invention. The scope of protection shall be as stated in the claims.

### Embodiment three

Through the description of the above embodiments, those skilled in the art can clearly understand that the method according to the above embodiment can be implemented by means of software plus a necessary general hardware platform, and of course, by hardware, but in many cases, the former is a better implementation. Based on such understanding, portions of the technical solutions of the present invention that contribute substantially or to the prior art may be embodied in the form of a software product stored in a storage medium (eg, ROM, RAM, disk, the optical disc), includes a number of instructions for causing a terminal device (which may be a cell phone, a computer, a server, or a network device, etc.) to perform the methods described in various embodiments of the present invention.

Embodiments of the present invention also provide a storage medium. Alternatively, in the embodiment, the foregoing storage medium may be configured to store program code for performing the following steps:
At step 1. a flag file is established at a preset position of the system according to the received system reset indication. Herein the system reset indication is used to indicate that the system performs a reset operation;
At step 2, after the system is restarted, determine whether a flag file exists in the preset position of the system;
At step 3, the system is reset when determining the flag file exists in the preset position.

Alternatively, the storage medium is further arranged to store program code for performing the method steps recited in the above embodiments.

Alternatively, in this embodiment, the foregoing storage medium may include, but not limited to, a variety of media that can store program code, such as a USB flash drive, a Read-Only Memory (ROM), a Random Access Memory (RAM), a mobile hard disk, a magnetic memory ,a disk, or a optical disc etc.

Alternatively, in this embodiment, the processor executes the method steps described in the foregoing embodiments according to the stored program code in the storage medium.

Alternatively, the specific examples in this embodiment may refer to the examples described in the foregoing embodiments and the alternative embodiments, and details are not described herein again.

Obviously, those skilled in the art should understand that the various modules or steps of the present invention described above may be implemented by a general-purpose computing device, which may be centralized on a single computing device or distributed over a network of multiple computing devices. Alternatively, they may be implemented by program code executable by the computing device such that they may be stored in the storage device by the computing device and, in some cases, may be different from the order herein. The steps shown or described are performed, or they are separately fabricated into individual integrated circuit modules, or a plurality of modules or steps are fabricated as a single integrated circuit module. As such, the disclosure is not limited to any specific combination of hardware and software.

The above description is only a preferred embodiment of the present invention, and is not intended to limit the disclosure, and various changes and modifications may be made to the present invention. Any modifications, equivalent substitutions, improvements, etc., made within the spirit and scope of the present invention are intended to be included within the scope of the present invention.

### INDUSTRIAL APPLICABLILTY

Through the present invention, a flag file is established at a preset position of the system according to the received system reset indication, herein the system reset indication is used to indicate a reset operation on the system; after the system is restarted, determine whether the flag file exists in the preset position of the system. if it is determined that there is a flag file in the preset position, reset the system. Thus it can be seen that the above scheme is used to establish a flag file in the preset position of the system when the system needs to be reset. when the system is restarted, it is determined whether the system reset is needed by determining whether the preset position exists or not, and if needed, resetting the system in the state of starting the system, thereby avoiding the system reset operation in the system recovery mode. Therefore, the complexity of implementing the system reset process is reduced, thereby solving the problem of high complexity in implementing the system reset process in the related art.

## Claims

1. A method for system reset of a system, comprising:
establishing a flag file at a preset position of the system according to receiving a system reset indication, wherein the system reset indication is used to indicate a reset operation on the system;
determining whether the flag file exists in the preset position of the system after the system is restarted;
resetting the system when it is determined that the flag file exists in the preset position.

2. The method according to claim 1, wherein establishing a flag file at a preset position of the system according to receiving a system reset indication comprising:
receiving the system reset indication;
initiating a recovery mode of the system according to the system reset indication;
erasing a cache area in the recovery mode, and establishing the flag file in the preset position of the cache area.

3. The method according to claim 1, wherein resetting the system comprising:
deleting all the files, or all folders, or all files and folders except a preset reserved file in the first preset path, wherein the preset reserved file comprising at least one of the following: a file stored in the memory of the system, a file stored in the default path and a file stored in a whitelist.

4. The method according to any one of claims 1 to 3, wherein determining whether the flag file exists in the preset position of the system comprising:
decrypting the system according to a predetermined rule after the system is restarted;
determining whether the flag file exists in the preset position of the system, in the case where the system is decrypted successfully.

5. The method according to claim 4, wherein decrypting the system according to a predetermined rule comprising:
detecting an encryption type of the system, wherein the encryption type comprising one of the following: a default password, a custom password;
decrypting the system using the default password if the encryption type is the default password; or
acquiring an decryption information and decrypting the system according to the decryption information; if the encryption type is the custom password.

6. The method according to claim 5, wherein acquiring decryption information and decrypting the system according to the decrypting information comprising:
mounting data based on a temporary file, sending a password input indication, wherein the password input indication configured to prompt the user to input the customized password;
receiving the decryption information in response to the password input indication;
determining whether the decrypted information matches the system;
decrypting the system when determining that the decrypted information matches the system;
unloading the data based on the temporary file when the system is decrypted successfully.

7. An apparatus for system reset of a system, comprising:
an establishment module, configured to establish a flag file at a preset position of the system according to the received system reset indication, wherein the system reset indication is configured to indicate a reset operation on the system;
a determination module, configured to determine whether the flag file exists in the preset position of the system after the system is restarted;
a reset module, configured to reset the system when determined that the flag file exists in the preset position.

8. The apparatus according to claim 7, wherein the establishment module comprising:
a receiving unit, configured to receive the system reset indication;
a booting unit configured to initiate a recovery mode of the system according to the system reset indication;
a processing unit configured to erase the cache area in the recovery mode, and establish the flag file at the preset position in the cache area.

9. The apparatus according to claim 7, wherein the reset module comprising:
deleting all the files, or all folders, or all files and folders except a preset reserved file in the first preset path, where the preset reserved file comprising at least one of the following: a file stored in the memory of the system, a file stored in the default path and a files stored in a whitelist.

10. The apparatus according to any one of claims 7 to 9, wherein the determination module comprising:
a decryption unit configured to decrypt the system according to a predetermined rule after the system is restarted;
a determination unit is configured to determine whether the flag file exists in the preset position of the system when the system is decrypted successfully.

11. A system reset electronic device comprising: a processor and a memory, wherein :
the processor is configured to establish a flag file at a preset position of the system according to the received system reset indication, wherein the system reset indication is configured to indicate a reset operation on the system; after the system is restarted, determining whether the flag file exists in the preset position of the system; and resetting the system when determining that the flag file exists in the preset position;
The memory is coupled to the processor and configured to store a system configuration before the system is reset and store a preferred configuration after the system is reset.

12. The electronic device according to claim11, wherein the processor is comprising:
receiving the system reset indication;
initiating a recovery mode of the system according to the system reset indication;
erasing the cache area in the recovery mode, and establishing the flag file in the preset position of the cache area.

13. The electronic device according to claim11, wherein the processor is comprising:
deleting all files, or folders, or all files and folders except the preset reserved file in the first preset path, wherein the preset reserved file comprising at least one of the following: a file stored in the memory of the system, a file stored in the default path and a file stored in a whitelist.

14. The electronic device according to any one of claims 11 to 13, wherein the processor is comprising:
decrypting the system according to a predetermined rule after the system is restarted;
determining whether the flag file exists in the preset position of the system when the system is decrypted successfully.
